# EUROPEAN PATENT APPLICATION

(11) **EP 2 717 620 A1**
(43) Date of publication of application: **09.04.2014**
(21) Application number: 11866900.1
(22) Date of filing: 15.09.2011
(51) Int. Cl.: H04W 28/18

(54) **METHOD AND DEVICE FOR REPRESENTING MULTI-POINT TRANSMISSION ABILITY OF UE**

(30) Priority: 30.05.2011 CN 201110143122
(71) Applicant: ZTE Corporation, Shenzhen, Guangdong 518057 (CN)
(72) Inventor: HUANG, Kan, Shenzhen Guangdong 518057 (CN); YANG, Li, Shenzhen Guangdong 518057 (CN)
(74) Representative: Durán-Corretjer, S.L.P.
(86) International application number: PCT/CN2011/079697
(87) International publication number: WO 2012/162977

(57) **Abstract**

Disclosed are a method and device for representing the multi-point transmission ability of UE. The method includes the following steps: the UE determining the representation manner of the multi-point transmission support ability thereof according to the number of multi-point transmission modes supported thereby and representing the multi-point transmission support ability thereof using the representation manner; and the UE sending the multi-point transmission support ability thereof to the network side. The present invention improves the processing capability and stability of the system.

## Description

### Field of the Invention

The present invention relates to the field of mobile communications, and especially, to a method and an apparatus for representing the multipoint transmission capability of User Equipment (UE).

### Background of the Invention

In a Wideband Code Division Multiple Access (WCDMA) network, the Universal Terrestrial Radio Access Network (UTRAN) includes two kinds of basic network elements, i.e. , one is Radio Network Controller (RNC) and the other is Base Station (namely, NodeB).

With the development of the WCDMA network, High Speed Downlink Packet Access (HSDPA), High Speed Uplink Packet Access (HSUPA), Dual Cell-High Speed Downlink Packet Access (DC-HSDPA), Dual Band-Dual Cell-High Speed Downlink Packet Access (DB-DC-HSDPA), Dual Cell-High Speed Uplink Packet Access (DC-HSUPA), Four Carrier-High Speed Downlink Packet Access (4C-HSDPA), Eight Carrier-High Speed Downlink Packet Access (8C-HSDPA) technologies are introduced successively, so that the data transmission rate of the UE is improved continuously. One of the premises for realizing these technologies is that the UE has to support more bands, and more band combinations. In a supported single band, the UE needs to support a wider bandwidth; and in a supported dual-band, the UE needs to support more dual-band carrier combinations. Currently, the 3GPP protocol has completely specified the manner for the UE to transmit the band, bandwidth and dual-band carrier combination information supported thereby under multicarrier technologies such as DC-HSDPA, DB-DC-HSDPA, DC-HSUPA and 4C-HSDPA.

In order to achieve higher data throughput, especially the throughput rate of the cell edge, after the analysis and demonstration of 3GPP technology, an enhanced function is proposed: the UE can receive data blocks simultaneously from two sectors in one frequency point of the same NodeB or from one and the same frequency point of different NodeBs, i.e., within one and the same Transmission Time Interval (TTI), the number of data blocks received by the UE is twice more than that in the traditional mode, which is called DF-DC-HSDPA or SF-DC-HSDPA technology. The mode of receiving data blocks from different cells in one and the same NodeB is referred to as Intra-NodeB mode; and the mode of receiving data blocks from different cells in different NodeBs is referred to as Inter-NodeB mode. From this, it is easy to infer that for UE which supports multicarrier, within one and the same transmission time interval (TTI), the UE can support that the data blocks are received from different sectors in a plurality of frequency points, wherein the number of frequency points in different sectors may be different. For example, UE with 4C-HSDPA capability may support to employ 4C to receive data simultaneously in each sector, or may also only support to employ 4C to receive data in one sector; or may only support to employ 2C to receive data in two sectors respectively; or may support to employ 1C to receive data in one sector, and at the same time to employ 2C to receive data in another sector.

However, in the related art, since the maximum number of downlink carriers supported by the UE in various sectors is not fixed, when the network configures resources for the UE, the configuration of resources may be insufficient, and thus cause the establishment of a multipoint transmission operation is failed.

### Summary of the Invention

The present invention is to provide a solution for representing the multipoint transmission capability of UE, so as to at least solve the problem in the related art that failed establishment of a multipoint transmission operation results from insufficient resources configured for the UE by the network side.

In order to realize the above-mentioned object, according to one aspect of the present invention, a method for representing the multipoint transmission capability of UE is provided.

The method for representing the multipoint transmission capability of UE according to an embodiment of the present invention includes the following steps of: the UE determining a representation manner of the multipoint transmission support capability of the UE according to the number of multipoint transmission modes supported by the UE, and using the representation manner to represent the multipoint transmission support capability of the UE; and the UE sending the multipoint transmission support capability of the UE to network side.

Preferably, the step of the UE determining the representation manner of the multipoint transmission support capability of the UE according to the number of multipoint transmission modes supported by the UE includes: in the case that the number of multipoint transmission modes supported by the UE is greater than a predetermined value, the UE selecting a matrix manner or a classification manner to represent the multipoint transmission support capability of the UE according to the maximum number of supported sectors, wherein the maximum number of supported sectors is the number of sectors that the UE supports and can receive data simultaneously; and in the case that the number of multipoint transmission modes supported by the UE is less than or equal to the predetermined value, the UE using an exhaustion manner to represent the multipoint transmission support capability of the UE.

Preferably, the step of the UE selecting the matrix manner or the classification manner to represent the multipoint transmission support capability of the UE according to the maximum number of supported sectors includes: if the maximum number of supported sectors is 2, then selecting the matrix manner to represent the multipoint transmission support capability of the UE; and if the maximum number of supported sectors is greater than 2, then selecting the classification manner to represent the multipoint transmission support capability of the UE.

Preferably, the step of selecting the matrix manner to represent the multipoint transmission support capability of the UE includes: establishing a matrix with the number of carrier frequencies used by one of the 2 sectors supported by the UE as the horizontal axis and the number of carrier frequencies used by the other of the 2 sectors supported by the UE as the vertical axis; if the UE supports the number of carrier frequencies identified by the horizontal axis and the number of carrier frequencies identified by the vertical axis in the matrix simultaneously, then filling 1 into a corresponding unit of the matrix, otherwise, filling 0 into the corresponding unit of the matrix; and converting the information about all the units in the matrix into binary numbers so as to represent the multipoint transmission support capability of the UE.

Preferably, the matrix is an M x M square matrix, wherein M is the maximum number of supported carrier frequencies plus 1.

Preferably, the step of selecting the classification manner to represent the multipoint transmission support capability of the UE includes: classifying the multipoint transmission support capability of the UE as a sub-classification according to the number of sectors where the UE supports with the same number of frequency points; and further dividing into a sub-attribute in each sub-classification according to the maximum number of carrier frequencies in a single sector and the number of frequency points of the sector; and assigning a value to the sub-attribute in each sub-classification orderly so as to represent the multipoint transmission support capability of the UE.

Preferably, the step of the UE using an exhaustion manner to represent the multipoint transmission support capability of the UE includes: listing combinations between the frequency points and sectors supported by the UE; and identifying the multipoint transmission support capability of the UE corresponding to each of the combinations with an N-decimal integer, wherein N is the maximum number of supported carrier frequencies plus 1.

Preferably, after the UE sending the multipoint transmission support capability of the UE to the network side, the method further includes: the network side receiving the multipoint transmission support capability of the UE, and performing resource configuration on the UE according to the multipoint transmission support capability of the UE.

In order to realize the above-mentioned object, according to another aspect of the present invention, an apparatus for representing the multipoint transmission capability of UE is provided.

The apparatus for representing the multipoint transmission capability of UE according to an embodiment of the present invention includes: a determination module, configured to determine a representation manner of the multipoint transmission support capability of the UE according to the number of multipoint transmission modes supported by the UE; a representation module, configured to use the representation manner determined by the determination module to represent the multipoint transmission support capability of the UE; and a sending module, configured to send the multipoint transmission support capability of the UE to network side.

Preferably, the determination module is further configured to, in the case that the number of multipoint transmission modes supported by the UE is greater than a predetermined value, select a matrix manner or a classification manner to represent the multipoint transmission support capability of the UE according to the maximum number of supported sectors, wherein the maximum number of supported sectors is the number of sectors that the UE support and can receive data simultaneously; and in the case that the number of multipoint transmission modes supported by the UE is less than or equal to the predetermined value, use an exhaustion manner to represent the multipoint transmission support capability of the UE.

By the present invention, the UE determines a representation manner of the multipoint transmission support capability of the UE according to the number of multipoint transmission modes supported thereof, and uses the representation manner to represent the multipoint transmission support capability of the UE, and then informs the represented multipoint transmission support capability of the UE to the network side, which solves the problem in the related art that failed establishment of a multipoint transmission operation results from insufficient resources configured for the UE by the network side, improving the processing capability and stability of the system.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig. 1 is a flowchart of a method for representing the multipoint transmission capability of UE according to an embodiment of the present invention;
Fig. 2 is a structural block diagram of an apparatus for representing the multipoint transmission capability of UE according to an embodiment of the present invention;
Fig. 3 is a flowchart of a matrix representation method according to embodiment II of the embodiments of the present invention;
Fig. 4 is a flowchart of a classification representation method according to embodiment III of the embodiments of the present invention; and
Fig. 5 is a flowchart of an exhaustion representation method according to embodiment IV of the embodiments of the present invention.

### Detailed Description of the Embodiments

The present invention will be described hereinafter in detail with reference to the accompanying drawings and in conjunction with embodiments. It needs to note that the embodiments of the present application and the features in the embodiments can be combined with each other if there is no conflict.

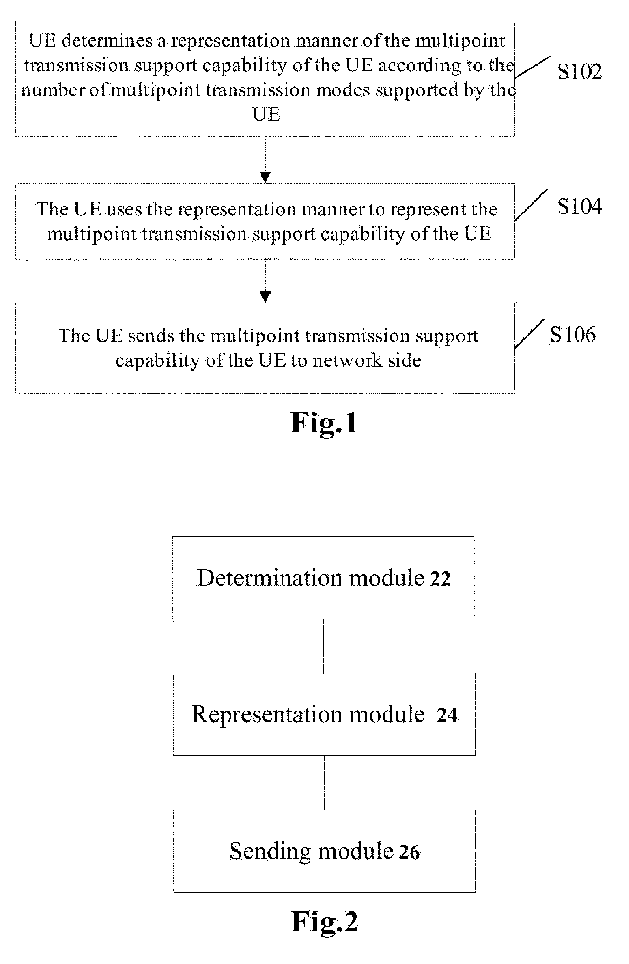

According to the embodiments of the present invention, a method for representing multipoint transmission capability of UE is provided. Fig. 1 is a flowchart of a method for representing the multipoint transmission capability of UE according to an embodiment of the present invention. As shown in Fig. 1, the method comprises the following steps.

Step S102, UE determines a representation manner of the multipoint transmission support capability of the UE according to the number of multipoint transmission modes supported by the UE;

Step S104, the UE uses the representation manner to represent the multipoint transmission support capability of the UE; and

Step S106, the UE sends the multipoint transmission support capability of the UE to network side.

By the above-mentioned steps, the UE determines a representation manner of the multipoint transmission support capability of the UE according to the number of multipoint transmission modes supported thereof, and uses the representation manner to represent the multipoint transmission support capability of the UE, and then informs the represented multipoint transmission support capability of the UE to the network side, which solves the problem in the related art that failed establishment of a multipoint transmission operation results from insufficient resources configured for the UE by the network side, improving the processing capability and stability of the system.

Preferably, in Step S102, in the case that the number of multipoint transmission modes supported by the UE is greater than a predetermined value, the UE may select a matrix manner or a classification manner according to the maximum number of supported sectors to represent the multipoint transmission support capability of the UE, wherein the maximum number of supported sectors is the number of sectors which are supported by the UE and in which the data can be received simultaneously; and in the case that the number of multipoint transmission modes supported by the UE is less than or equal to the predetermined value, the UE may use an exhaustion manner to represent the multipoint transmission support capability of the UE. This method may select different representation manners for different situations, improving the adaptability of the system.

Preferably, the step of the UE selecting the matrix manner or the classification manner according to the maximum number of supported sectors to represent the multipoint transmission support capability of the UE may include: if the maximum number of supported sectors is 2, then the matrix manner is selected to represent the multipoint transmission support capability of the UE; and if the maximum number of supported sectors is greater than 2, then the classification manner is selected to represent the multipoint transmission support capability of the UE. This method can improve the effectiveness of the system.

Preferably, the step of selecting the matrix manner to represent the multipoint transmission support capability of the UE may include: a matrix is established with the number of carrier frequencies used by one of the 2 sectors supported by the UE as the horizontal axis and the number of carrier frequencies used by the other of the 2 sectors supported by the UE as the vertical axis; if the UE supports the number of carrier frequencies identified by the horizontal axis and the number of carrier frequencies identified by the vertical axis simultaneously, then 1 is filled into a corresponding unit of the matrix, otherwise, 0 is filled into this unit; and the information about all the units in the matrix is converted into binary numbers so as to represent the multipoint transmission support capability of the UE. This method is suitable for the situation where the maximum number of supported sectors is 2, improving system efficiency.

Preferably, the matrix is an M x M square matrix, wherein M is the maximum number of supported carrier frequencies plus 1. This method is simple, practicable and with the strong operability.

Preferably, the step of selecting the classification manner to represent the multipoint transmission support capability of the UE may include: the multipoint transmission support capability of the UE is classified as a sub-classification according to the number of sectors where the UE supports with the same number of frequency points (namely, the UE supports the number of sectors where the data can be received simultaneously); and each sub-classification is further divided into a sub-attribute according to the maximum number of carrier frequencies in a single sector and the number of frequency points of the sector; and a value is assigned to the sub-attribute in each sub-classification orderly so as to represent the multipoint transmission support capability of the UE. This method is suitable for the situation where the maximum number of supported sectors is greater than 2, and the representation procedure is simplified by classifying and hierarchical representation, improving the processing capability of the system.

For example, if the UE support that the number of sectors where the data is received simultaneously is 3, the number of sectors with the same number of frequency points in an embodiment may be 0, 2 or 3, wherein "0" represents that the number of frequency points of all the sectors are different, "2" represents that 2 sectors of the 3 sectors have the same number of frequency points and the another 1 sector has a different number of frequency points, and "3" represents that the 3 sectors have the same number of frequency points.

Preferably, the step of the UE using the exhaustion manner to represent the multipoint transmission support capability of the UE may include: combinations between the frequency points and sectors supported by the UE are listed; and the multipoint transmission support capability of the UE corresponding to each combination is identified with an N-decimal integer, wherein N is the maximum number of supported carrier frequencies plus 1. This method is suitable for the situation where the multipoint transmission support capability of the UE is fewer, and can utilize the system resources effectively.

Preferably, after Step S106, the network side receives the multipoint transmission support capability of the UE, and performs resource configuration on the UE according to this multipoint transmission support capability of the UE. This method can improve the performance of the system.

Corresponding to the above-mentioned method, an embodiment of the present invention also provides an apparatus for representing multipoint transmission capability of UE. Fig. 2 is a structural block diagram of an apparatus for representing the multipoint transmission capability of UE according to an embodiment of the present invention. As shown in Fig. 2, the apparatus **20** includes: a determination module **22** is configured to determine a representation manner of the multipoint transmission support capability of the UE according to the number of multipoint transmission modes supported by the UE; a representation module **24,** coupled to the determination module **22,** is configured to use the representation manner determined by the determination module **22** to represent the multipoint transmission support capability of the UE; and a sending module **26,** coupled to the representation module **24,** is configured to send the multipoint transmission support capability of the UE to network side.

By the above-mentioned apparatus **20,** the determination module **22** is configured to determine a representation manner of the multipoint transmission support capability of the UE according to the number of multipoint transmission modes supported by the UE and the representation module **24** is configured to use the representation manner to represent the multipoint transmission support capability of the UE, and then the sending module **26** is configured to send the multipoint transmission support capability of the UE to the network side, which solves the problem in the related art that failed establishment of a multipoint transmission operation results from insufficient resources configured for the UE by the network side, improving the processing capability and stability of the system.

Preferably, the determination module **22** is further configured to, in the case that the number of multipoint transmission modes supported by the UE is greater than the predetermined value, select a matrix manner or a classification manner according to the maximum number of supported sectors to represent the multipoint transmission support capability of the UE, wherein the maximum number of supported sectors is the number of sectors which are supported by the UE and in which the data can be received simultaneously; and in the case that the number of multipoint transmission modes supported by the UE is less than or equal to the predetermined value, use an exhaustion manner to represent the multipoint transmission support capability of the UE.

Preferably, the apparatus **20** may be located in the UE. At this scenario, the RNC may parse the multipoint transmission support capability sent by the UE.

The implementation process of the above-mentioned embodiment will be described in detail in conjunction with preferred embodiments and drawings hereinafter.

### Embodiment I

This embodiment provides a method for representing the multipoint transmission capability of UE, which is used for expressing a combination relationship between the number of carriers and the number of sectors receiving data simultaneously for the UE, thus in the scenario where the network side needs to configure resources for the UE, the UE may send the information about the number of frequency points of each sector supported thereof to a network by a suitable signaling. Only after having received this information properly, the network side can allocate suitable wireless resources to the UE, namely, perform rational configuration, and thus operates well. If the network side can acquire in advance the maximum number of downlink carriers supported in each sector of the UE, the network side can perform configuration accurately when configuring resources for the UE, which ensures the maximum exploitation of the capability supported by the UE.

Firstly, several basic variables need to be defined: the maximum number of supported sectors (MaxSectorSupport, MSS in short) is the number of sectors that the UE supports and can receive data simultaneously; the maximum number of supported carrier frequencies (MaxFrequencySupport, MFS in short) is the maximum number of frequency points which the UE supports and can receive data simultaneously in a certain sector; and multipoint transmission support capability (MultiPointCapability, MPC in short, i.e., the comprehensive capability of the UE illustrated in the embodiment of the present invention) includes a combination capability between several sectors and several number of carrier frequencies which the UE supports and can receive data simultaneously.

The concept of the method for representing the multipoint transmission capability of the UE is: in the case that the maximum number of sectors is 2, the matrix representation manner may be adopted to convert into binary numbers for definition; and in the case that the maximum number of sectors is greater than 2, the classification representation manner may be adopted. In addition, if there are quite few multipoint transmission modes that are supported by the UE, the exhaustion representation manner may also be adopted.

Hereinafter, the above-mentioned three methods will be introduced simply.

Method i , a matrix representation manner, i.e., a capability matrix of (MFS + 1) × (MFS + 1) is used for representing the capability range thereof.

Method ii : a classification representation manner,, for the situation where the MSS expands further, the attribute field is adopted to make a definition.

Method iii: an exhaustion representation manner, if there are quite few multipoint transmission modes that are supported by the UE, a special direct enumeration manner in description may be adopted, i.e., the capabilities supported by the UE are enumerated, and each combination relationship of the capabilities is identified with an integer number.

It should be noted that the embodiment includes but not limited to the representation manners above, other expressions expanding from the matrix concept, classification concept and the concept of numbering the multipoint transmission capability shall also be contained therein.

### Embodiment II: the matrix representation manner

Taking UE with up to 8 carrier frequencies as an example, the following (MFS + 1) × (MFS + 1) capability matrix is adopted to represent the capability range thereof. As shown in Table 1, the horizontal axis represents the number of carrier frequencies used in one sector therein, and the vertical axis represents the number of carrier frequencies used correspondingly in the other sector, and for each unit in the matrix, "1" represents whether the UE supports this scenario, and "0" represents that the UE is not supported this scenario. For example, the black unit in this table represents that the UE support one carrier frequency is used for one sector, and 5 carrier frequencies is used for the other sector, in which the data is received simultaneously.

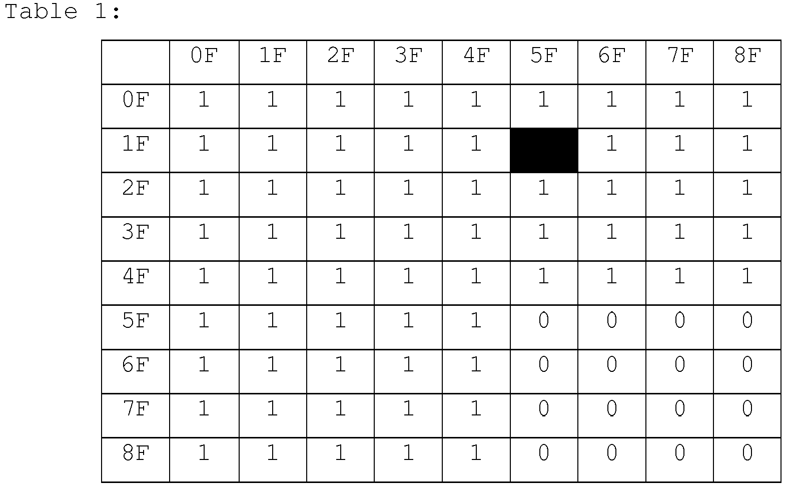

It can be seen from all the multipoint transmission support capabilities in the table above that the illustrated scenario represents that the UE does not support the scenario where the numbers of carrier frequencies of two sectors are both greater than 4.

By the above-mentioned method, the support capability of a UE to 8 carrier frequencies in the case of two sectors can be expressed completely. Preferably, if the maximum number of carrier frequencies supported by the UE increases, it can be represented by increasing the number of rows and the number of columns of the matrix simultaneously.

Preferably, since all the elements in the matrix are "0" and "1", it can be represented with binary, and due to the definition, this matrix is extremely symmetric with respect to the diagonal, that is, if x carrier frequencies of sector A and y carrier frequencies of sector B are supported by the UE, y carrier frequencies of the sector A and x carrier frequencies of the sector B will be supported by the UE correspondingly, so the methods of matrix compression can be used for compressing the matrix.

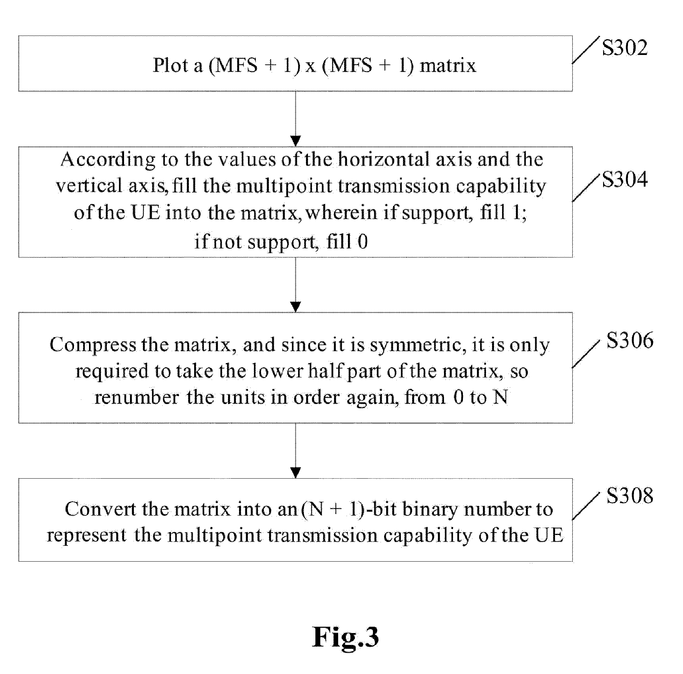

Hereinafter, with respect to the background of 3GPP Rel11, the use of this matrix representation manner during implementation will be described with examples. For example, MSS = 2 and MFS = 8. Fig. 3 is a flowchart of a matrix representation method according to embodiment II of the embodiments of the present invention. As shown in Fig. 3, the flow comprises the following steps.

Step S302, the following (MFS + 1) × (MFS + 1) matrix is plotted.

Step S304, the multipoint transmission capability of the UE is filled into the matrix, wherein if the UE supports the combination of the number of carrier frequencies of the horizontal axis and the number of carrier frequencies of the vertical axis simultaneously, the corresponding block of the matrix will be filled with 1, otherwise, filled with 0, as shown in the following Table 2.

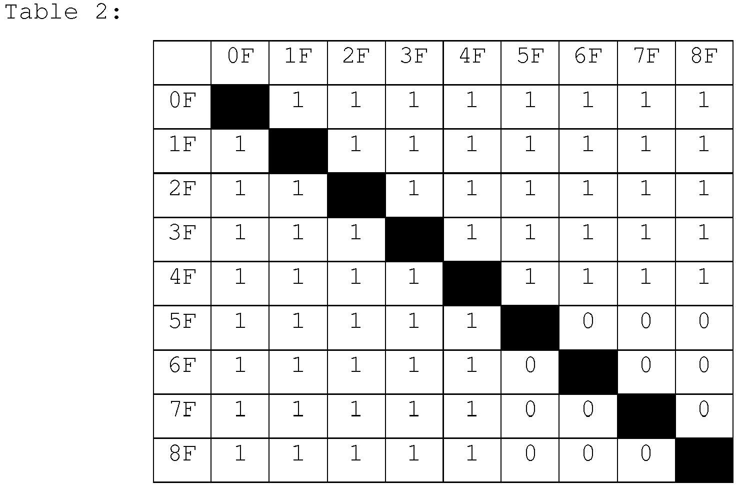

Step S306, it can be found that the elements above the black diagonal are completely symmetric to the elements below the black diagonal, and therefore, the whole matrix can be represented by merely the elements below the black diagonal and the black diagonal. Thus, a matrix with 81 units original can be represented completely with 45 units. As the following Table 3, these units of the matrix can renumbered as integers from 0 to 44.

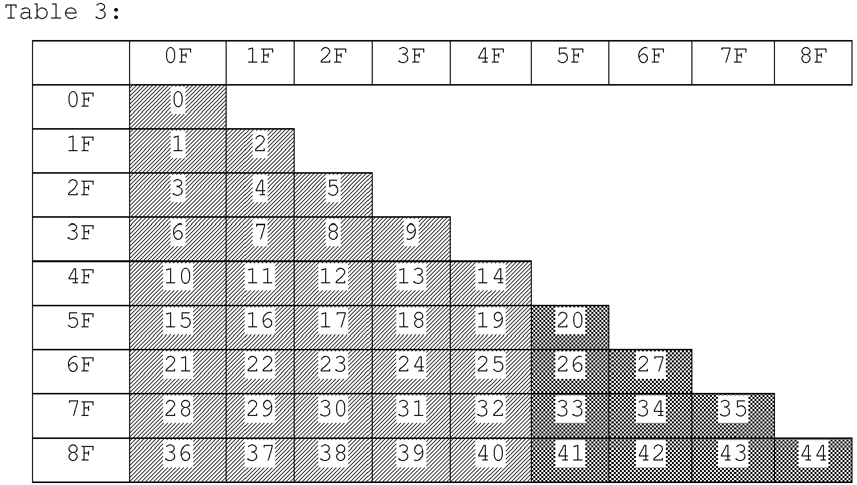

Step S308, "0" or "1" in each unit is represented with binary numbers, that is, this matrix can be abstracted to a 45-bit binary number, and can be represented with two 32-bit numbers (WORD32), namely, with 64 bits data totally, wherein there can be 19 redundant bits in high bits for carrying other special capability information, which may be filled with 0 temporarily.

During implementation, the numbering manner is as follows: the digit of the n th bit is filled with the content of the unit numbered with n, the content of the inclined-strip part in Table 3 is "1" and the content of the grid part in Table 3 is "0"; thus, the finally obtained binary number is 00011 11110001 11110011 11101111 11111111 11111111; it is converted into a hexadecimal number: 0x03F1 0xF3EF FFFF. Therefore, these two 32-bit numbers can be used for representing the multipoint transmission capability of the UE completely.

### Embodiment III: the classification representation manner

For the situation where MSS expands further, if only the method of expanding the matrix to be a cube and performing to enumerate full permutation, there will be many binary numbers consumed, and the numbering thereof is also quite complicated, and therefore, the manner of attribute field can be used for definition.

The classification representation manner in this embodiment is that the number of sectors with the same number of frequency points is classified as level 1 classification attribute, for example, for the situation where the MSS is 3, there can be three different situations where the numbers of frequency points of 3 sectors are the same, the numbers of frequency points of 2 sectors are the same, and the numbers of frequency points of 3 sectors are different. Then, sub-attributes can be defined under each level 1 classification attribute to indicate more accurate capability expression. This concept can also be expanded to the case of more sectors.

Hereinafter, the use of this matrix representation manner during implementation will be described with examples with respect to the background of 3GPP Rel12. For the situation where MSS = 3 and MFS = 8, according to the method in embodiment II, the multipoint transmission capability of the UE is converted from a matrix to a cube, the total number of units is (MFS + 1) × (MFS + 1) × (MFS + 1), that is, there are 9 × 9 × 9 = 729 units. As such, even if the repeated situations are removed, there are still many combination situations, and the correlation is quite complicated when the combination situations are identified by the above numbered method with digits, while for the UE, it is unnecessary to make such detailed distinguishing. Therefore, for the situation where MSS is 3, the following capability representation manner can be adopted.

Firstly, the capability representation of the UE may be classified as the following three category attributes, wherein "1" represents the attribute is supported by the UE, "0" represents the attribute is not supported by the UE, and there are some sub-attributes under each category attribute:
(1) the situation where the numbers of carrier frequencies of all the sectors are unequal is supported: identified with NoSectorFrequencySameCapality;
   wherein the maximum number of carrier frequencies in a single sector is identified with MaxFrequecyNum; and
   the difference between the maximum number of frequency points and the minimum number of frequency points (not including 0) is identified with MaxGapp;
(2) the situation where the numbers of carrier frequencies of 2 sectors in all the sectors are equal is supported: identified with 2SectorRequencySameCapality;
   wherein the maximum number of frequency points of 2 sectors with the same number of frequency points is identified with SameFrequecyNumBitmap;
   the number of frequency points of the another sector with a different number of frequency points is identified with DifferentFrequencyBitmap;
   whether the number of frequency points of a single sector can be greater than the number of frequency points of 2 sectors with the same frequency points ("1"represents yes, and "0" represents no) is identified with DifferentFrequencyExceedSameFrequecy; and
   the difference between the maximum number of frequency points and the minimum number of frequency points (not including 0) is identified with MaxGapp;
(3) the situation where the numbers of carrier frequencies of 3 sectors in all the sectors are equal is supported: identified with 3SectorRequencySameCapality;
   wherein the maximum number of frequency points of 3 sectors with the same number of frequency points is identified with SameFrequecyNumBitmap.

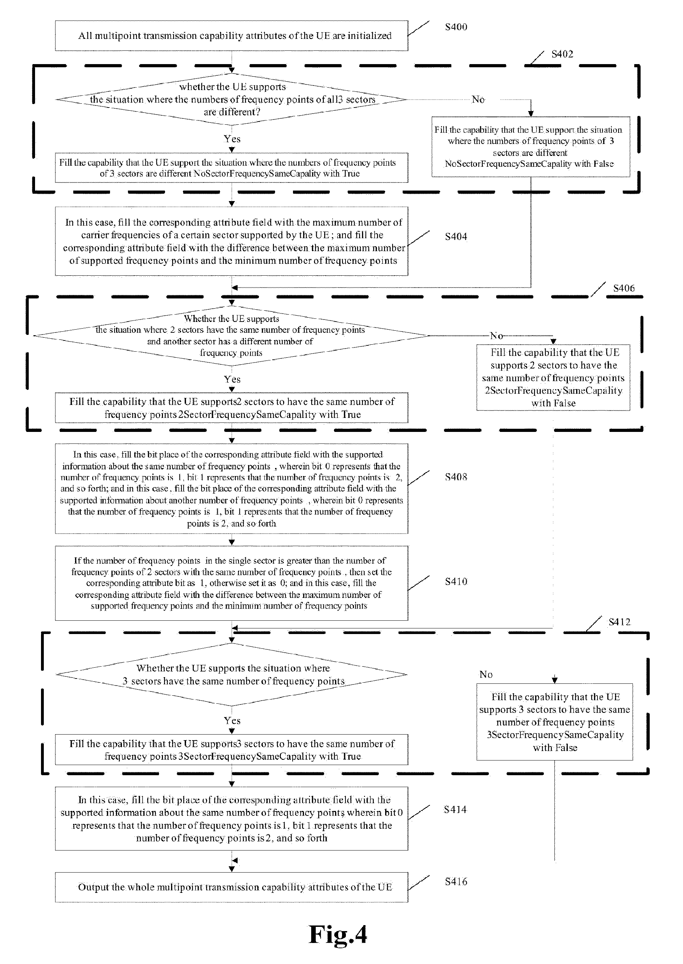

Fig. 4 is a flowchart of a classification representation method according to embodiment III of the embodiments of the present invention. As shown in Fig. 4, the flow comprises the following steps.

Step S400, all multipoint transmission capability attributes of the UE are initialized, i.e., all the fields of the multipoint transmission capability attributes of the UE are cleaned;
Step S402: if the numbers of carrier frequencies of all the sectors supported by the UE are different, then set NoSectorFrequencySameCapality = 1, otherwise, set NoSectorFrequencySameCapality = 0 and jump to Step S406;

Step S404, if the numbers of carrier frequencies of all the sectors are different, the maximum number of carrier frequencies of a certain sector supported by the UE is filled into NoSectorFSC.MaxFrequecyNum; and the difference between the maximum number of frequency points and the minimum number of frequency points is filled into NoSectorFSC.MaxGap;
Step S406: if the numbers of carrier frequencies of 2 sectors supported by the UE are the same, then set 2SectorFrequencySameCapality = 1, otherwise, set 2SectorFrequencySameCapality = 0 and jump to Step S412;

Step S408, the supported information about the number of frequency points of 2 sectors with the same number of frequency points is filled into 2SectorFSC.SameFrequecyNumBitmap, wherein bit0 represents the number of carrier frequencies is 1, bit1 represents that the number of carrier frequencies is 2, and so forth; the number of frequency points of another sector with a different number of frequency points is filled into 2SectorFSC.DifferentFrequencyBitmap, wherein bit0 represents the number of carrier frequencies is 1, bit1 represents that the number of carrier frequencies is 2, and so forth;

Step S410, if the number of frequency points in the single sector can be greater than the number of frequency points of 2 sectors with the same number of frequency points, then set 2SectorFSC.DifferentFrequencyExceedSameFrequecy = 1, otherwise, set 2SectorFSC.DifferentFrequencyExceedSameFrequecy = 0; and the difference (not including 0) between the maximum number of frequency points and the minimum number of frequency points is filled into 2SectorFSC.MaxGap;
Step S412: if the numbers of carrier frequencies of 3 sectors supported by the UE are the same, then set 3SectorFrequencySameCapality = 1, otherwise, set 3SectorFrequencySameCapality = 0 and jump to step S416;

Step S414, the supported information about the number of frequency points of 3 sectors with the same number of frequency points is filled into 3SectorFSC.SameFrequecyNumBitmap, wherein bit0 represents the number of carrier frequencies is 1, bit1 represents that the number of carrier frequencies is 2, and so forth; and

Step S416, the fill of all attribute fields of the multipoint transmission capability of the UE is completed.

For example, for an UE with MFS being 8 and MSS being 3, if only the situation where the numbers of carrier frequencies of 3 sectors are different is not supported by the UE, only the situation where 3 sectors have one carrier frequency, or where 2 sectors have 2 carrier frequencies, and another sector has 1 carrier frequency or has no carrier frequency is supported by the UE, then the capabilities of the UE shall be filled as follow:
(1) NoSectorFrequencySameCapality = 0;
(2) 2SectorFrequencySameCapality = 1; 2SectorFSC.SameFrequecyNumBitmap = 0x03; 2SectorFSC.DifferentFrequencyBitmap = 0x1; 2SectorFSC.DifferentFrequencyExceedSameFrequecy = 0; 2SectorFSC.MaxGap = 1;
(3) 3SectorFrequencySameCapality = 1;
   3SectorFSC.SameFrequecyNumBitmap = 0x1.
   Embodiment IV: the exhaustion representation manner

Since the attributes in embodiment III cannot cover the UE completely, especially when there are very few kinds of capabilities supported by the UE, this embodiment IV provides a method for mapping the multipoint transmission capability of UE to an integer, in which a special enumeration and description method is adopted to indicate the capabilities supported by the UE, and the following coding manner can be used.

First, an integer is defined to represent the MPC, wherein the integer first has MSS bit, and each bit represents the number of sectors in an activated set. The particular value of each bit is represented with an (MFS + 1)-decimal number, wherein 0 represents not support, 1 represents support, and MFS represents the number of currently used frequency points.

For example, for 2 sectors with a single frequency point, there are totally 4 states, which are represented as according to the described above:
MPC= 11 (binary) = 3; MPC= 10 (binary) = 2; MPC= 01 (binary) = 1; and MPC= 00 (binary) = 0.

For example, for 2 sectors with 2 frequency points, there are totally 9 states, which are represented as according to the described above:
MPC= 22 (ternary) = 8; MPC= 21 (ternary) = 7; MPC= 20 (ternary) = 6; MPC= 12 (ternary) = 5;
MPC= 11 (ternary) = 4; MPC= 10 (ternary) = 3; MPC= 02 (ternary) = 2; MPC= 01 (ternary) = 1; and
MPC = 00(ternary) = 0.

Accordingly, for 2 sectors with 8 frequency points, there are totally 81 states, which can be represented with 0-80.

Continuing expansion, for S sectors with F frequency points, there are S powers of (F + 1) capability combinations, which can be represented with 0-(*F+*1)*^{s}*.

Hence, when adopting the exhaustion representation method in this embodiment, the UE only needs to define an array, wherein the length of the array is the number of supported modes, and each unit of the array is filled into the number corresponding to the supported modes.

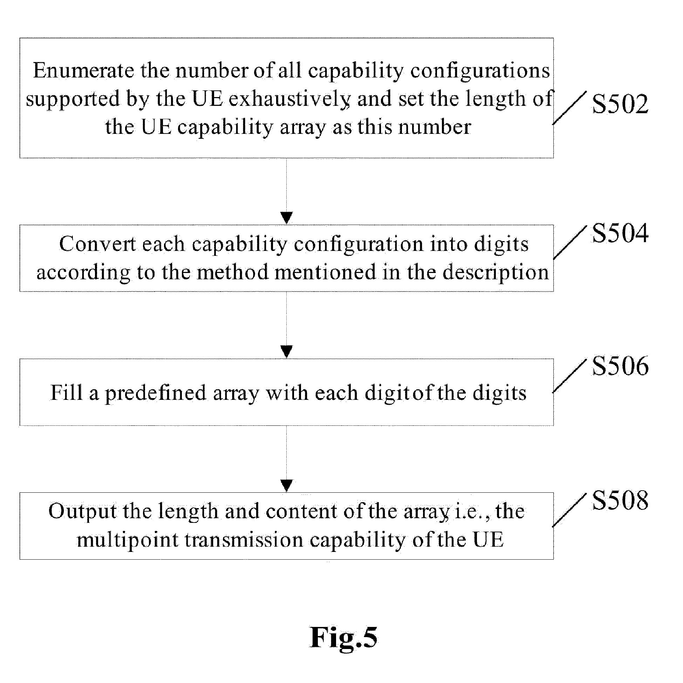

Fig. 5 is a flowchart of an exhaustion representation method according to embodiment IV of the f embodiments of the present invention. As shown in Fig. 5, the flow comprises the following steps.

Step S502, the number of all capability configurations supported by UE is enumerated exhaustively, and the length of the UE capability array is set as this number;

Step S504, each capability configuration is converted into digits according to the corresponding method mentioned above;

Step S506, each digit of the digits is filled into the predefined array; and

Step S508, the length and content of the array are output, i.e., the multipoint transmission capability of the UE is obtained.

For example, for 2 sectors with 2 frequency points of an UE, if only the configuration that the same number of frequency points of two sectors is supported, that is, only the two modes of multipoint transmissions MPC = 11 (ternary) and MPC = 22 (ternary) mentioned above are supported, this capability configuration is converted into digits, i.e., 4 and 8, then filled into the array, namely, the final operation is:
MPS.n = 2;
MPS[0] = 4, and MPS[1] = 8.

It shall be noted that all the attributes in the embodiments above have expansibility, when the UE indicates these attributes, i.e., it represents that the UE supports such configuration attributes, the network side can perform allocation and switching among various configuration attribute states according to the real-time quality situation of the wireless network.

In summary, the embodiments of the present invention refer to a method for representing the multipoint transmission capability of the UE in a multicarrier wireless communication system, that is, the different manners are selected to represent the multipoint transmission support capability of the UE according to the number of transmission capabilities supported by the UE and the maximum number of supported sectors, and then the represented multipoint transmission support capability of the UE is informed to the network side, which comprehensively expresses the multipoint transmission capability of the UE and solves the problem in the related art that failed establishment of a multipoint transmission operation results from insufficient resources configured for the UE by the network side, improving the processing capability and stability of the system.

Obviously, those skilled in the art shall understand that the above-mentioned modules and steps of the disclosure can be realized by using general purpose calculating device, can be integrated in one calculating device or distributed on a network which consists of a plurality of calculating devices. Alternatively, the modules and the steps of the disclosure can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for representing multipoint transmission capability of User Equipment (UE), **characterized by** comprising the following steps of:
the UE determining a representation manner of the multipoint transmission support capability of the UE according to the number of multipoint transmission modes supported by the UE, and using the representation manner to represent the multipoint transmission support capability of the UE; and
the UE sending the multipoint transmission support capability of the UE to network side.

2. The method according to claim 1, **characterized in that** the step of the UE determining the representation manner of the multipoint transmission support capability of the UE according to the number of multipoint transmission modes supported by the UE comprises:
in the case that the number of multipoint transmission modes supported by the UE is greater than a predetermined value, the UE selecting a matrix manner or a classification manner to represent the multipoint transmission support capability of the UE according to the maximum number of supported sectors, wherein the maximum number of supported sectors is the number of sectors that the UE supports and can receive data simultaneously; and
in the case that the number of multipoint transmission modes supported by the UE is less than or equal to the predetermined value, the UE using an exhaustion manner to represent the multipoint transmission support capability of the UE.

3. The method according to claim 2, **characterized in that** the step of the UE selecting the matrix manner or the classification manner to represent the multipoint transmission support capability of the UE according to the maximum number of supported sectors comprises:
if the maximum number of supported sectors is 2, then selecting the matrix manner to represent the multipoint transmission support capability of the UE; and
if the maximum number of supported sectors is greater than 2, then selecting the classification manner to represent the multipoint transmission support capability of the UE.

4. The method according to claim 3, **characterized in that** the step of selecting the matrix manner to represent the multipoint transmission support capability of the UE comprises:
establishing a matrix with the number of carrier frequencies used by one of the 2 sectors supported by the UE as the horizontal axis and the number of carrier frequencies used by the other of the 2 sectors supported by the UE as the vertical axis;
if the UE supports the number of carrier frequencies identified by the horizontal axis and the number of carrier frequencies identified by the vertical axis in the matrix simultaneously, then filling 1 into a corresponding unit of the matrix, otherwise, filling 0 into the corresponding unit of the matrix; and
converting the information about all the units in the matrix into binary numbers so as to represent the multipoint transmission support capability of the UE.

5. The method according to claim 4, **characterized in that** the matrix is an *M* x *M* square matrix, wherein M is the maximum number of supported carrier frequencies plus 1.

6. The method according to claim 3, **characterized in that** the step of selecting the classification manner to represent the multipoint transmission support capability of the UE comprises:
classifying the multipoint transmission support capability of the UE as a sub-classification according to the number of sectors where the UE supports with the same number of frequency points; and further dividing into a sub-attribute in each sub-classification according to the maximum number of carrier frequencies in a single sector and the number of frequency points of the sector; and
assigning a value to the sub-attribute in each sub-classification orderly so as to represent the multipoint transmission support capability of the UE.

7. The method according to claim 2, **characterized in that** the step of the UE using an exhaustion manner to represent the multipoint transmission support capability of the UE comprises:
listing combinations between the frequency points and sectors supported by the UE; and
identifying the multipoint transmission support capability of the UE corresponding to each of the combinations with an N-decimal integer, wherein N is the maximum number of supported carrier frequencies plus 1.

8. The method according to any one of claims 1 to 7, **characterized in that** after the UE sending the multipoint transmission support capability of the UE to the network side, the method further comprises:
the network side receiving the multipoint transmission support capability of the UE, and performing resource configuration on the UE according to the multipoint transmission support capability of the UE.

9. An apparatus for representing multipoint transmission capability of User Equipment (UE), **characterized by** comprising:
a determination module, configured to determine a representation manner of the multipoint transmission support capability of the UE according to the number of multipoint transmission modes supported by the UE;
a representation module, configured to use the representation manner determined by the determination module to represent the multipoint transmission support capability of the UE; and
a sending module, configured to send the multipoint transmission support capability of the UE to network side.

10. The apparatus according to claim 9, **characterized in that** the determination module is further configured to, in the case that the number of multipoint transmission modes supported by the UE is greater than a predetermined value, select a matrix manner or a classification manner to represent the multipoint transmission support capability of the UE according to the maximum number of supported sectors, wherein the maximum number of supported sectors is the number of sectors that the UE support and can receive data simultaneously; and in the case that the number of multipoint transmission modes supported by the UE is less than or equal to the predetermined value, use an exhaustion manner to represent the multipoint transmission support capability of the UE.
